# EUROPEAN PATENT APPLICATION

(11) **EP 2 725 578 A1**
(43) Date of publication of application: **30.04.2014**
(21) Application number: 13190229.8
(22) Date of filing: 25.10.2013
(51) Int. Cl.: G10L 25/72, G06Q 50/00, H04H 20/12, G10L 25/21

(54) **Loudness log for recovery of gated loudness measurements and associated analyzer**

(30) Priority: 26.10.2012 US 201213662070
(71) Applicant: TEKTRONIX, INC., Beaverton, OR 97077-0001 (US)
(72) Inventor: Johnson, Scott, Beaverton, OR Oregon 97077-0001 (US)
(74) Representative: Clarke, Jeffrey

(57) **Abstract**

Embodiments of the invention include a system for evaluating loudness data. The system includes an audio input to receive an audio signal, a loudness measurer structured to continuously measure a loudness of the audio signal, and a data logger structured to record the measured loudness data in a loudness data log. Other embodiments may also include a log analyzer to receive the logged loudness data and make evaluations based on the data. The log analyzer includes a log input structured to receive the loudness data log and a violation module structured to determine if data in the loudness data log indicates a loudness violation occurred. Methods are also described.

## Description

### FIELD OF THE INVENTION

This disclosure is directed to measuring a loudness of an audio stream, and, more specifically, to a system and method that allows audio loudness measurements to be recovered and analyzed from archived audio loudness data without the necessity of archiving an entire audio program/service.

### BACKGROUND

Cable Television and Satellite Television providers, jointly referred to as Multi-Video Program Distributors (MVPDs), typically do not generate the majority of the content they provide, but are primarily pass-through services. Instead, content providers such as THE DISCOVERY CHANNEL generate the vast part of programs watched by viewers, including advertising and promotional spots embedded in the delivered content ("embedded advertisements"). In general, the MVPD acquires the particular feeds from dozens or hundreds of networks, mixes in local advertisements, multiplexes the multiple channels into a single transport stream, then delivers the transport stream to the user.

When producing content or advertisements, sound is normally mixed in to accompany the images. Sometimes sound for one portion of a program is mixed in or set to play at a higher or louder level than others. Most typical is that a sound level changes when the program breaks for or returns from commercials, promotions, or other interstitial programming. Recall that many of these breaks in program are provided by the cable networks themselves, rather than the local cable provider, although some advertisements may be locally inserted. It has been a common practice in the industry to take advantage of the wide audio dynamic range afforded by digital television, and mix commercials at a louder audio level than the main program, in order to make them stand out more and increase viewer attention.

The practice of having commercials set at a louder level than the main program became so widespread that, after thousands of user complaints, Congress passed the Commercial Advertisement Loudness Mitigation (CALM) Act to try to stem the practice. The CALM Act states, essentially, that non-program content should be presented at the same overall loudness as the long-form, or program, content.

CALM Act compliance is difficult because, although cable television providers must abide by the Act, they do not control the programming, which is instead controlled by the content providers, many of whom are not broadcasters and thus outside the scope of the regulatory authority of the Federal Communications Commission (FCC). In many instances the content providers do not even identify where embedded advertisements are inserted into the program. It is therefore up to the cable providers to monitor the cable network stream for loud commercials, in addition to ensuring that they, themselves, are also in compliance.

The FCC has issued rulemaking as FCC Report and Order 11-182, which specifies a procedure known as a "spot-check," to assist cable providers in complying with the CALM Act. The spot-check calls for the cable providers to randomly select one of their channels from their service, and monitor the loudness of that channel for a 24-hour period. The loudness algorithms specified by standards such as ITU (International Telecommunications Union .R BS-1770, EBU (European Broadcasting Union) R/128 , and ATSC (Advanced Television Systems Committee) A/85 specify a "long term," or "infinite" loudness measurement, which requires *a priori* knowledge of program boundaries, i.e. boundaries of non-program material. As described above, however, MVPDs providers do not always themselves know of program boundaries, which may be controlled by the content providers. Therefore, short-term, rather than long-term, measurements are commonly made instead, but short-term measurements are not as accurate as long-term measurements. These short term measurements only approximate the long-term measurements made by content providers. If the measured loudness is beyond the specified threshold, this is deemed excessive loudness or a loudness violation. When loudness violations occur during a short-term measurement, the provider is supposed to determine whether any potential loudness violations occurred during commercials, and, if so, confirm this fact with a long term measurement. Making such a confirmation typically requires that the cable provider have the original audio content available, which the cable providers typically do not store under normal conditions.

Embodiments of the invention address this and other limitations in the prior art.

### SUMMARY OF THE INVENTION

Embodiments of the invention include a system for evaluating loudness data. The system includes an audio input to receive an audio signal, a loudness measurer structured to continuously measure a loudness of the audio signal, and a data logger structured to record the measured loudness data in a loudness data log. Other embodiments of the system may also include a log analyzer to receive the logged loudness data and make evaluations based on the data. The log analyzer includes a log input structured to receive the loudness data log and a violation module structured to determine if data in the loudness data log indicates a loudness violation occurred.

Other embodiments include A method for automatically detecting audio violations. The method includes receiving an audio signal in the form of audio data, and may also include receiving playout data that corresponds to periods when the audio data was transmitted for playback. Next, the method measures the loudness data of the audio signal and records the measured loudness data in a loudness data log. Then a log analyzer accesses the loudness data log after the measured loudness data has been stored and compares the data in the loudness data log to a threshold to identify potential loudness violations. In some embodiments the identified potential loudness violations are associated to particular periods within the playout data.

### BRIEF DESCRIPTION OF THE DRAWINGS

Fig. 1 is a functional block diagram illustrating a loudness log generator and a system for analyzing the loudness log according to embodiments of the invention.

Fig. 2 is an example flow diagram illustrating methods of generating and analyzing a loudness log according to embodiments of the invention.

Fig. 3 is a functional block diagram illustrating components of the loudness log generator of Fig. 1 according to embodiments.

Fig. 4 is a functional block diagram illustrating components of the loudness log analyzer of Fig. 1 according to embodiments.

### DETAILED DESCRIPTION

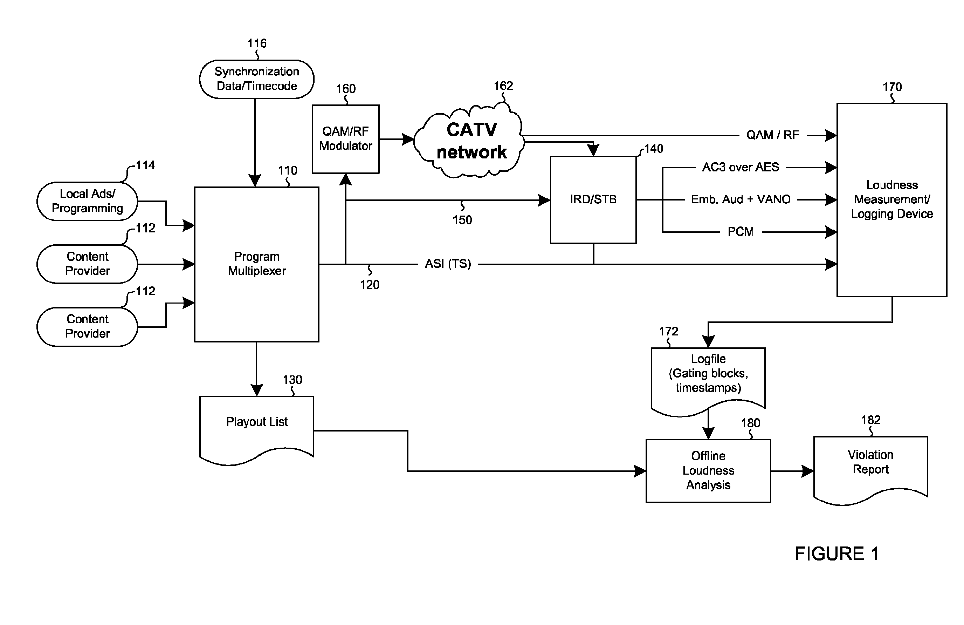

Fig. 1 is a functional block diagram illustrating a loudness log generator and a system for analyzing the loudness log according to embodiments of the invention.

In Fig. 1, a cable television provider, for example, operates a program multiplexer 110. The program multiplexer 110 receives audio/video content from content providers 112 such as cable networks or other sources. The cable television provider may also mix local advertisements 114 and various synchronization data such as timestamps and timecode data 116 into a final output from the multiplexer 110, which is a transport stream 120, carried by a physical connection such as an Asynchronous Serial Interface (ASI). The transport stream 120 includes audio and video to be distributed to users, as described below. Also, the program multiplexer 110 produces a playout list 130 that includes program information about the audio and video data on the transport stream 120. For instance, the playout list 130 includes lists and associated times of programs, breaks, commercials, promotion slots, etc.

Distribution of the transport stream 120 from the cable provider may take many forms, as is known in the art. The transport stream 120 may be sent to an Integrated Receiver and Decoder (IRD) or Set Top Box (STB) 140 over a communication link 150, through which the audio/video data may be received and displayed on a television or monitor (not illustrated). In other embodiments, the Transport Stream 120 may be first sent to an RF (Radio Frequency) modulator 160 for processing to be sent over a cable television distribution network 162, and further to the STB 140 for delivery to the viewer.

As described in detail below, in general, embodiments according to the invention include a loudness measurement and logging device 170 that measures the loudness of audio and logs the loudness data in a logfile 172. A log analyzer 180 reads the logfile 172 and scans for loudness violations. The log analyzer 180 may also receive the playout list 130, or other information that correlates to the audio file to the loudness data, and generates one or more violation reports. These reports 182 preferably include sufficient information from the playout list 130 to identify what was happening in the transport stream 120 when the violation occurred. Timestamps in both the transport stream 120 and playout list 130 may allow the lists to be correlated, for example. This allows interested parties to determine, for instance, whether the violation occurred during the main program or during a commercial. If the violation was during a commercial, the violation report 182 may help determine if it was a commercial inserted by a content provider 112, or a local commercial 114, or something else.

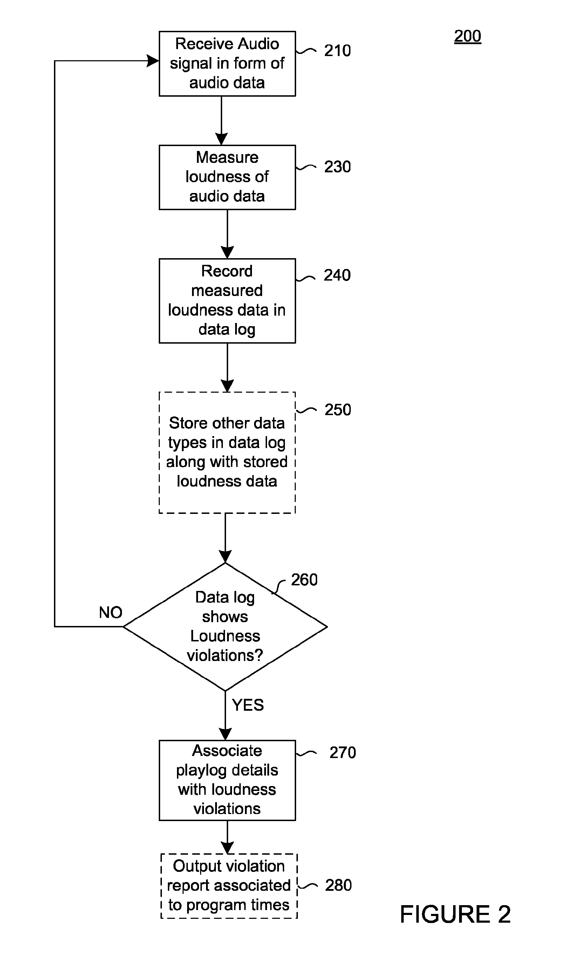

Fig. 2 is an example flow diagram 200 illustrating methods of generating and analyzing a loudness log according to embodiments of the invention. The flow 200 begins at an operation 210 by receiving an audio signal in the form of audio data. As described below, the audio data can be in digital form, or may be analog. Next, an operation 230 measures loudness data of the audio signal, and the loudness data is recorded in a loudness data log in an operation 230. In some embodiments the loudness of the audio data may be measured in operation 230 over a 400ms gated window while the loudness data may be recorded in the data log every 100ms. The recording windows may overlap one another, as is known in the art. Other audio measurement durations or frequency of logging the data may also be used.

As illustrated by operation 250, additional data about the audio signal may also be stored in the data log, such as short-term measured loudness data, a dialnorm, gated loudness data, timestamps, true peak level, and timecode information. Short-term measured data generally includes one average loudness measurement every 3-10 seconds, while gated loudness data is pre-filtered, and only certain loudness data is considered when using gated loudness data. True peak level is the highest level that the audio signal reaches during a particular time period or until reset. Timestamps and timecode information may come from the cable television provider, described above with reference to Fig. 1, or may be generated by the loudness measurement logging device itself.

In some embodiments the method also includes analyzing the logged data for loudness violations. If violations or potential violations are found, for example in a decision operation 260, the a violation report may be generated. Also, if the log analyzer can also access playout list information 130 (Fig. 1) when accessing the log file, then the method can associate identified potential loudness violations to particular periods within the playout data, and can provide such information in a violation report in an operation 280. Such a violation report may be very helpful when trying ascertain if and when a loudness violation occurred. In some embodiments the loudness violation or potential violation may come from analyzing the short-term loudness data or gated loudness data as well.

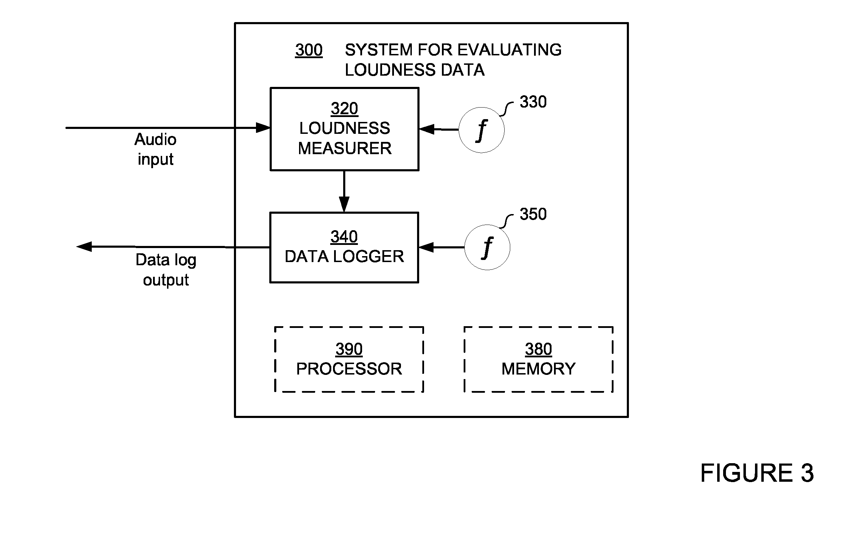

Fig. 3 is a functional block diagram illustrating components of the loudness log generator of Fig. 1 according to embodiments. A log generator, or system for evaluating loudness data 300, may include an audio input structured to receive an audio signal in the form of audio data. This audio input can take many forms. For example, with reference back to Fig. 1, the loudness measurement device 170, which the log generator may be an example of, may receive audio data directly from the distribution network 162, or even directly from the transport stream 120. In other embodiments the loudness measurement device 170 may receive audio data from the STB 140, which could come through any of a number of communication channels or protocols. For example audio data could be delivered in the popular digital AC-3 coding format from DOLBY DIGITAL, Embedded Audio + VANC, or in uncompressed form such as Pulse Code Modulation (PCM) form.

Some of the digital formats of data transmission also include sending metadata, or data that reveals information about the data being sent. For example, one form of metadata is dialnorm, which is a metadata parameter used with AC-3 coding to control gain of the playback device. In other words, the AC-3 coding sends the encoded audio data, and the dialnorm informs the playback device how loud to play the decoded audio data.

As the audio information is being received by the log generator, a loudness measurer 320 is structured to continuously measure a loudness of the audio signal over given integral or integration periods. As described above, the periods may be overlapping gating periods of 400ms each, or may be of shorter duration. In other embodiments the periods may be longer. The measured data is then passed to a data logger 340, which is structured to record the measured loudness data in a loudness data log, and generate the log as output.

The loudness measurer 320 may include or be coupled to a frequency controller 330 to control how often new gating that dictate the integration windows for loudness measurement are opened. A similar controller (not illustrated) may control the width of the gating windows.

Similarly, the data logger 340 may include or be coupled to a frequency controller 350 to control how often loudness data is logged. In some embodiments loudness data is logged every 100ms, or maybe more often. Frequent logging allows the loudness data to be analyzed more thoroughly.

Although not illustrated, the data logger 340 may include its own synchronization or time code generator, or such as those described with reference to Fig. 1. In this way the data logger can generate its own timecode or synchronization codes to store in the data log. In addition to storing information generated by the data logger 340, the data logger 340 may also store in the data log any information available to the data logger, or information that the data logger may derive from such information. For example the data logger 340 may generate, for storage in the data log, any of short term measurements, gated measurements, dialnorm information, true peak level, one or more timestamps, and timecode information. Further, if the log generator is also coupled to video that accompanies the measured audio signal, or if such video information is available, then the data logger 340 may include a small or thumbnail image of the video that accompanies the logged information in the data log.

The data logger 340 may log data for a relatively long time, for instance one or more days.

Either of the loudness measurer 320, data logger 340, and the frequency controllers 330, 350 may be performed by dedicated hardware, or by performing functions by a processor 390. Such functions may be stored in an associated memory 380. Other implementations may use a combination of hardware, software, programmable logic device, Digital Signal Processor, etc., for implementation.

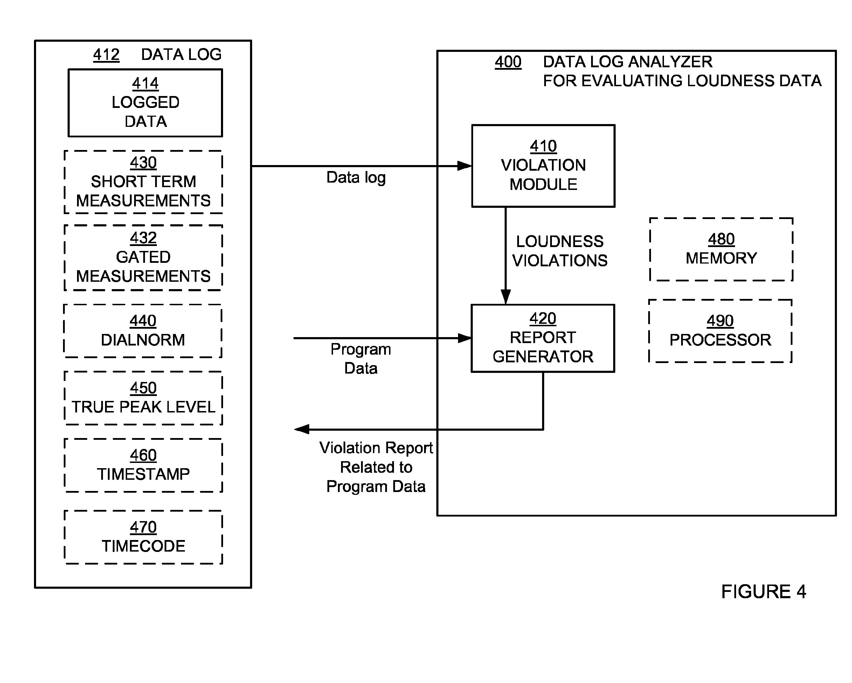

Fig. 4 is a functional block diagram illustrating components of the loudness log analyzer of Fig. 1 according to embodiments, and also illustrating example data that may be stored in the data log.

As described above, a data log 412 output from the measuring and logging system primarily includes the measured logged audio data 414. Other optional data may be stored along with the measured logged audio data 414 that make violation detection easier or more accurate. Information from the data log 412 may also make violation reports more accurate. As described above, the data log 412 may optionally include short term measurements 430, gated measurements 432, dialnorm 440, true peak level 450, one or more timestamps 460, and timecode information 470. The resultant log file may include any of this information, or any information derived from this information produced by the log analyzer.

This data log 412 information is passed to and read by the data log analyzer 400. The log analyzer 400 includes a log input structured to receive the loudness data log 412 that includes measured loudness data 414.

From the information contained in the data log, a violation module 410 is structured to determine if any data in the loudness data log indicates a loudness violation occurred or a potential violation occurred. When such a violation or potential violation occurs, a report generator 420 generates a violation report.

To determine whether a violation occurred, the violation module 410 may simply compare the logged data 414 to a threshold, or may use the logged data to "reconstruct" or otherwise simulate the original audio signal, or the salient portions thereof.

In some embodiments the program data 130 (Fig. 1) is input to the data log analyzer 400, which allows the report generator to associate program data with times when violations of potential violations occurred.

Thus, by using a combination of the violation module 410 and report generator 420 that includes the program data 130, the log analyzer 400 is able to effectively produce the same information as a long-term loudness measurement used for the spot-check, without requiring the necessity of storing all the audio data itself.

In some embodiments the report generator 420 generates a violation report that includes either a list of violations or potential violations. In other embodiments the report generator may produce a report that lists particular program sections in which a violation occurred, and possibly an indication of the loudness of the audio stream in comparison to the dialnorm that caused the violation.

As mentioned above, the violation module 410 is structured to receive any of the data stored in the data log 412. The violation module 410 may, therefore, use any of the data available to it in making its violation or potential violation decision. Additionally, the report generator 420 may use any information received from the data log 412 to prepare its generated reports. In some embodiments, the report may include small or thumbnail images of the video that accompanies the logged information.

Either of the violation module 410 or report generator 420 may be performed by dedicated hardware, or by performing functions in a processor 490. Such functions may be stored in an associated memory 480. Other implementations may use a combination of hardware, software, programmable logic device, Digital Signal Processor, etc., for implementation.

As described above, in various embodiments, components of the invention may be implemented in hardware, software, or a combination of the two, and may comprise a general purpose microprocessor, a digital signal processor (DSP), an application specific integrated circuit (ASIC), a field-programmable gate array (FPGA), or the like.

It will be appreciated from the forgoing discussion that the present invention represents a significant advance in video detection. Although specific embodiments of the invention have been illustrated and described for purposes of illustration, it will be understood that various modifications may be made without departing from the scope of the invention. Accordingly, the invention should not be limited except as by the appended claims.

## Claims

1. A system for evaluating loudness data from a television program distributor, the system comprising:
a log generator including:
an audio input structured to receive an audio signal from the program distributor in the form of audio data,
a loudness measurer structured to continuously measure a loudness of the audio signal over given integration periods, and
a data logger structured to record the measured loudness data in a loudness data log.

2. The system for evaluating loudness data according to claim 1 in which the data logger records measured loudness data in the loudness data log at a rate of more than one record per given integration period.

3. The system for evaluating loudness data according to claim 1, in which the data logger is further structured to store in the loudness data log at least one of short-term measured loudness data, a dialnorm, gated loudness data, timestamps, true peak level, and timecode information.

4. The system for evaluating loudness data according to claim 1, further comprising:
a log analyzer, including;
a log input structured to receive the loudness data log; and
a violation module structured to determine if data in the loudness data log indicates a loudness violation occurred.

5. The system for evaluating loudness data according to claim 4, further comprising a playlog input structured to receive program information that correlates to the loudness data log, and in which the violation module is structured to associate particular portions of the program information with the loudness violation.

6. The system for evaluating loudness data according to claim 5, in which the data logger is further structured to store at least one of short-term measured loudness data and gated loudness data in the loudness data log, and in which the violation module is further structured to determine if data in the loudness data log indicates a short-term loudness violation or a gated loudness violation occurred, and structured to associate particular portions of the program information with the loudness violation.

7. A data log analyzer for evaluating loudness data, comprising:
a log input structured to receive a loudness data log that includes measured loudness data of an audio input stream;
an input structured to receive program information that correlates to the loudness data log; and
a violation module structured to determine if data in the loudness data log indicates a loudness violation occurred, and structured to associate particular portions of the program information with the loudness violation.

8. The system for evaluating loudness data of claim 7, in which the loudness data log additionally includes short-term loudness measurements and gated loudness measurements of the audio input stream, and in which the violation module is structured to analyze the short-term loudness data and the gated loudness measurements to determine if a violation occurred.

9. The system for evaluating loudness data of claim 6, in which the loudness data log further comprises one or more metadata, timestamps, timecode, and synchronization data.

10. A method of measuring and reporting loudness data, the method comprising:
receiving an audio signal;
measuring loudness data of the audio signal during regular intervals; and
recording the measured loudness data in a loudness data log.

11. The method of measuring and reporting loudness data of claim 10 in which
recording the measured loudness data occurs comprises recording at a rate of more than one data value per interval.

12. The method of measuring and reporting loudness data of claim 10, further comprising storing in the loudness data log, at least one of short-term measured loudness data, a dialnorm, gated loudness data, timestamps, true peak level, and timecode information.

13. A method for automatically detecting audio violations, comprising:
receiving an audio signal in the form of audio data;
receiving playout data that corresponds to periods when the audio data was transmitted for playback;
measuring loudness data of the audio signal;
recording the measured loudness data in a loudness data log;
accessing the loudness data log after the measured loudness data has been stored;
comparing the data in the loudness data log to identify potential loudness violations; and
associating the identified potential loudness violations to particular periods within the playout data.

14. The method for automatically detecting audio violations according to claim 13, further comprising recording at least one of short-term measured loudness data, a dialnorm, gated loudness data, timestamps, true peak level, and timecode information in the loudness data log.

15. The method for automatically detecting audio violations according to claim 14, in which comparing the data in the loudness data log to identify potential loudness violations comprises comparing short-term measured loudness data or comparing gated loudness data.
